# EUROPÄISCHE PATENTANMELDUNG

(11) **EP 0 790 747 A2**
(43) Veröffentlichungstag der Anmeldung: **20.08.1997**
(21) Anmeldenummer: 97100001.3
(22) Anmeldetag: 01.01.1997
(51) Int. Cl.: H04Q 7/22, H04Q 7/38

(54) **Verfahren zur Übermittlung eines Sammelrufs an Mobilteilnehmer in einem GSM-Netz**

(30) Priorität: 15.02.1996 DE 19605632
(71) Anmelder: AEG MOBILE COMMUNICATION GmbH, D-89081 Ulm (DE)
(72) Erfinder: Dressler, Hans-Joachim, Dr.-Ing., 89160 Dornstadt (DE); Hätty, Birger, Dipl.-Ing., 89081 Ulm/Donau (DE); Heilig, Michael, Dipl.-Ing., 89075 Ulm/Donau (DE); Lönnecke-Gabel, Volker, Dr. rer. nat., 89073 Ulm/Donau (DE)
(74) Vertreter: Körner, Ekkehard, Dipl.-Ing.

(57) **Zusammenfassung**

Bei einem Verfahren zur ortsselektiven Übermittlung von Sammelrufen von einem ortsfesten Dispatcher, der Zugang zu einem GSM-Netz hat, an Mobilteilnehmer des GSM-Netzes wird ein quasiparaleller Verbindungsaufbau zu den Mobilteilnehmern hergestellt. Jedem Sammelrufgebiet ist wenigstens ein spezielles Sammelruf-MSISDN/IMSI-Paar zugeordnet, in den Mobilgeräten sind die für sie relevanten Sammelruf-IMSIs mit den zugehörigen Sammelrufgebieten sowie den zugehörigen Dispatcher-Adressen gespeichert, der Sammelruf wird in einem der Sammelruf-ISMIs abgesetzt, und die Mobilgeräte zeigen den Empfang einer für sie relevanten Sammelruf-IMSI an den Mobilteilnehmer an und quittieren den Empfang an den Dispatcher.

## Beschreibung

Die Erfindung bezieht sich auf ein Verfahren zur ortsselektiven Vermittlung von vordefinierte Kurzdaten und ggf. Sprachinformation enthaltenden Sammelrufen von einem ortfesten Dispatcher, der Zugang zu einem GSM-Netz hat, an Mobilteilnehmer des GSM-Netzes.

Eine für Betriebsfunktsysteme unverzichtbare Kommunikationsart ist der Sammelruf (Broadcast). Authorisierten ortsfesten Teilnehmern, nachfolgend Dispatcher genannt, die in der Regel eine Leitungs- oder Überwachungsfunktion ausüben, wird damit die Möglichkeit gegeben, Daten- und/oder Sprachinformation an alle Mobilteilnehmer einer vordefinierten Gruppe unidirektional zu verteilen. Bei einigen Betriebsfunkanwendungen, z.B. dem Zugfunk, für welches Einsatzgebiet die Erfindung im besonderen konzipiert ist, besteht darüberhinaus die Forderung nach Ortsselektivität von Sammelrufen, d.h. es sollen nur diejenigen Gruppenteilnehmer angesprochen werden, die sich in einem bestimmten geographischen Gebiet, das in der Regel dem Verantwortungsbereich des Dispatchers entspricht, aufhalten. Bei einigen speziellen Betriebsfunkanwendungen, z.B. dem Zugfunk-Notruf, bei dem alle Züge, die sich in einem bestimmten Gebiet aufhalten, gewarnt und ggf. zum Anhalten aufgefordert werden sollen, kommt dann noch die Forderung nach sehr schneller Informationsverteilung hinzu. Diese soll mitunter innerhalb weniger Sekunden beginnen. In Funksystemen nach dem GSM-Standard (Phase I/II) steht kein Sammelruf zur Verfügung, der für die schnelle Verteilung von Kurzdaten oder Sprachinformation geeignet wäre. Der Teledienst SMS-CB (Short Message Service - Cell Broadcast) ist zwar im Prinzip für die Verteilung von Kurzdaten geeignet, jedoch ist die Übermittlungszeit zu lang.

Eine Möglichkeit zur Verteilung von Sprachinformation bietet der Multi Party Dienst (MPTY). Der Dispatcher muß dazu allerdings jeden Gruppenteilnehmer einzeln rufen und zu einer Konferenz zusammenschalten. Diese Aufbauprozedur ist entsprechend langwierig und deshalb für Anwendungen nicht geeignet, in denen der Zeitfaktor eine kritische Größe ist.

Der Erfindung liegt die Aufgabe zugrunde, ein Verfahren der eingangs genannten Art anzugeben, mit dem schnell eine unidirektionale Informationsverteilung aus vordefinierten Kurzdaten und/oder Sprachinformation in Systemen nach dem GSM-Standard zu den interessierenden mobilen Gruppenteilnehmern möglich ist.

Diese Aufgabe wird durch die im Anspruch 1 angegebenen Merkmale gelöst. Vorteilhafte Ausgestaltungen der Erfindung sind Gegenstand der Unteransprüche.

Um im GSM-System einen gewöhnlichen Ruf an einen mobilen Teilnehmer abzusetzen, wählt der Rufende zunächst dessen MSISDN (Mobile Subscriber ISDN Number). Im Netz wird die MSISDN dann in eine dem mobilen Teilnehmer bekannte Funkrufnummer IMSI (International Mobile Subscriber Identity) oder TMSI (Temporary Mobile Subscriber Identity), je nach Modus, übersetzt und über Paging-Kanäle ausgesendet, und zwar in alle BSC (Base Station Controller = Funkzellen) der LA (Location Area = Bereich), in der sich der Mobilteilnehmer zur Zeit aufhält.

Für die Aussendung eines Sammelrufs gemäß dem erfindungsgemäßen Verfahren werden die einzelnen Sammelrufgebiete dienstebezogen als ein Satz benachbarter Funkzellen definiert. Darüberhinaus werden im Numerierungsplan für jedes dieses Sammelrufgebiete ein oder mehrere MSISDN/IMSI-Paare definiert, d.h. die Sammelrufgruppen in den einzelnen Sammelrufgebieten werden im Netz wie einzelne Teilnehmer verwaltet. Mehrere MSISDNs bzw. IMSIs werden immer dann benötigt, wenn sich Sammelrufgebiete aus Zellen mehrerer Location Areas zusammensetzen. Zu jedem Teilsammelrufgebiet, bestehend aus den Zellen des Sammelrufgebiets, die zu einer Location Area gehören, ist jeweils ein MSISDN/IMSI-Paar zu reservieren.

Allen potentiellen Sammelrufteilnehmern werden nun die so reservierten Sammelruf-IMSIs bekanntgemacht, z.B. durch einen Datenverteildienst oder im Teilnehmergerät von vornherein fest abgespeichert. Ein Teilnehmergerät, das für den Empfang von Sammelrufen vorgesehen ist, kennt neben seiner individuellen IMSI also auch noch diverse Sammelruf-IMSIs. Je nachdem, ob der Ruf eine persönliche IMSI oder eine Sammelruf-IMSI enthält, reagiert das den Ruf erkennende Gerät jedoch unterschiedlich. Bei Empfang einer persönlichen IMSI anwortet das Gerät durch Senden von sogenannten RACHs, (Random Access Channel) mit dem Hinweis "Answer to Paging", sodaß das Netz einen Bezug zwischen Paging-Nachricht und Paging-Antwort im RACH herstellen kann. Das Senden der Paging-Nachricht wird für diesen Teilnehmer anschließend automatisch abgebrochen.

Im Unterschied dazu wird das Aussenden von Sammelruf-Paging als auf Anwenderebene definierte Kurznachricht verwendet. Eine Sammelruf-IMSI könnte z.B. vereinbarungsgemäß bedeuten: "Alle Züge im Sammelrufgebiet sofort anhalten !" Da die Pagingnachricht im gesamten Sammelrufgebiet ausgesendet wird, können alle für Sammelrufempfang eingerichteten mobilen Teilnehmergeräte, die sich in diesem Gebiet aufhalten, die Paging-Nachricht empfangen und den jeweiligen Teilnehmer beispielsweise durch Anzeige des Nachrichteninhalts auf einem Display und/oder durch akustische Signalisierung entsprechend informieren. Das GSM-Paging-Verfahren wird hier also durch Reservierung von Sammelrufnummern MSISDN/IMSI, deren Bedeutung den in Frage kommenden, für Sammelrufempfang ausgerüsteten Geräten bekanntgemacht wurde, als "Kurzdatensammelruf" verwendet. Durch Wahl der jeweiligen Sammelrufnummer vom Typ MSISDN kann auf diese Weise ein Dispatcher alle entsprechend ausgerüsteten Teilnehmer seines Bereiches gleichzeitig erreichen.

Für Sammelrufe zur Verteilung von Sprachinformation wird die Paging-Nachricht dazu verwendet, die Sammelrufteilnehmer zum Aufbau einer Verbindung MOC (Mobil Originated Call) zum verantwortlichen Dispatcher zu veranlassen. Die beim Dispatcher infolge des Sammelruf-Paging eingehenden, von den Mobilstationen ausgesendeten Rufe werden dann ggf. durch vorherige Konfiguration der privaten Nebenstellenanlage PABX (Private Automatic Branch Exchange) zu einer gerichteten Punkt-zu-Multipunkt-Konferenz zusammengeschaltet. Der Dispatcher kann ggf. über eine private Nebenstellenanlage PABX ggf. über ein oder mehrere Telefonnetze vom Typ ISDN und/oder über eine öffentliche Vermittlungsanlage PSTN (Public Switched Telefon Network) Verbindung zum GSM-System haben, von dem die anzusprechenden Mobilteilnehmer bedient werden.

Der Dispatcher wird durch entsprechende Signalisierung über die eingehende Rufe informiert und dadurch indirekt zum Sprechen aufgefordert. Die Sprachinformation wird anschließend an die Sammelrufteilnehmer verteilt. Solchen Sammelrufteilnehmern, denen aus irgendeinem Grund der Verbindungsaufbau zum Dispatcher nicht gelingt, erhalten zumindet die Paging-Nachricht und damit Basisinformation. Die Sprachinformation wird über Individualkanäle geleitet.

Im Unterschied zur Reaktion auf persönliche IMSIs ist dem Netz jedoch nun der Kontext zwischen gesendetem Paging und dem MOC unbekannt. Aus Sicht des Netzes bleibt das Sammelruf-Paging unbeantwortet und wird solange wiederholt, bis eine vorbestimmte Zeitdauer, die in einem Zeitgeber eingestellt ist, abgelaufen ist. Dieses hat insbesondere den Vorteil, daß mobile Teilnehmer, die nachträglich in das Sammelrufgebiet eintreten ("Late Entrants") die Sammelrufnachricht auch noch mitbekommen.

Für die Vermittlung der Kenntnis der Rufnummer des Dispatchers an die mobilen Sammelrufteilnehmer gibt es zwei grundsätzliche Lösungen:
1.) Die Rufnummer des Dispatchers für das jeweilige Sammelrufgebiet ist im Mobilgerät gespeichert gemäß System TS11 (GSM-Teleservice 11 = Standard Telephony),
2.) Es werden netzweite Rufnummern vom Typ "Ruf 110/112" auf der Basis des System TS12 (GSM-Teleservice 12 = Emergency Call) verwendet.

Bei der letzgenannten Verfahrensweise werden Mobilteilnehmer bei Wahl einer netzweit einheitlichen Rufnummer zellspezifisch, d.h. abhängig von ihrem gegenwärtigen Aufenthaltsort, zum nächstgelegenen Dispatcher durchgeschaltet.

Die Verwendung von TS11 ist immer dann sinnvoll, wenn z.B. die Grenzen von Sammelrufgebieten nicht mit den Grenzen von Funkzellen übereinstimmen. Verfügt das Mobilgerät über entsprechende Ortsinformation, die durch bekannte Navigationsverfahren gewonnen werden kann, wie beispielsweise GPS, Baken im Gleiskörper und/oder Wegstreckenmessung, was bei schienengebundenem Verkehr brauchbare Ergebnisse liefert, kann die Definition von Sammelrufgebieten völlig unabhängig von Funkzellen erfolgen. Diese Definition erfolgt im Voraus bei der Systemeinrichtung. Es gelten dann koordinaten-abhängige Dispatcher-Rufnummern.

Die Menge der sammelruf-spezifischen Daten, die dem Mobilgerät bekannt sein müssen, hängt in hohem Maße davon ab, wie die Sammelrufbereiche relativ zu den Location Areas definiert sind und ob die jeweiligen MOCs über den GSM-Dienst TS11 oder TS12 abgewickelt werden.

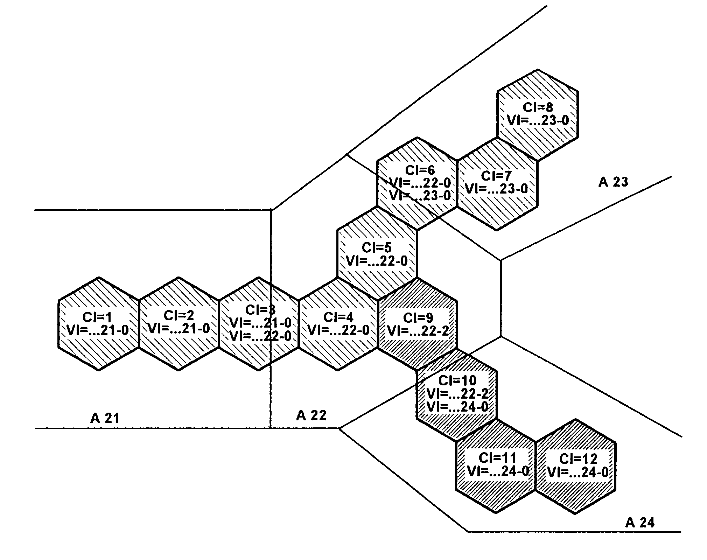

Zur weiteren Erläuterung der Erfindung wird nun auf die Zeichnung Bezug genommen.

Die Zeichnung zeigt beispielhaft einen Auszug auf dem Schienennetz einer Eisenbahngesellschaft und dessen Funkversorgung durch eine Aneinanderreihung von Funkzellen.

Im Folgenden wird der Fall beschrieben, daß die Sammelrufgebilde unabhängig von Location Areas definiert sind und die Zellengrenzen nicht mit den Grenzen der geographischen Sammelrufbereiche übereinstimmen. Die Funkversorgung des Schienennetzes der Eisenbahngesellschaft ist gemäß Zeichnung durch eine lückenlose Aneinanderreihung von Funkzellen, die in der Zeichnung durch Sechsecke gekennzeichnet sind, sichergestellt. Dabei ist im GSM-Standard jeder Zelle eine eindeutige Zellennummer, bestehend aus LAC (Location Area Code) und CI (Cell Identifier) zugeordnet. Die jeweils aktuellen Zellenparameter LAC und CI erfährt das Mobilgerät durch Lesen des Organisationskanals BCCH (Broadcast Control Channel). Im gezeigten Fall stoßen zwei Location Areas aneinander, von denen die Location Area 1 in der Zeichnung durch hell unterlegte Sechsecke und die Location Area 2 durch dunkel unterlegte Sechsecke gekennzeichnet sind. Weiterhin sing geographische Sammelrufgebiete mit A21, A22, A23 und A24 bezeichnet, deren Grenzen mit durchgezogenen Linien gekennzeichnet sind und die sich weder mit Zellengrenzen noch mit Location Area Grenzen decken.

Ein ortsfester Dispatcher, der einen Sammelruf absetzen möchte, leitet diesen durch Wahl der MSISDN, die seinem Sammelrufgebiet zugeordnet ist, ein. Im Falle des Sammelrufgebietes A21 ist dieses lt. nachfolgender Tabelle die Nummer ...1825.

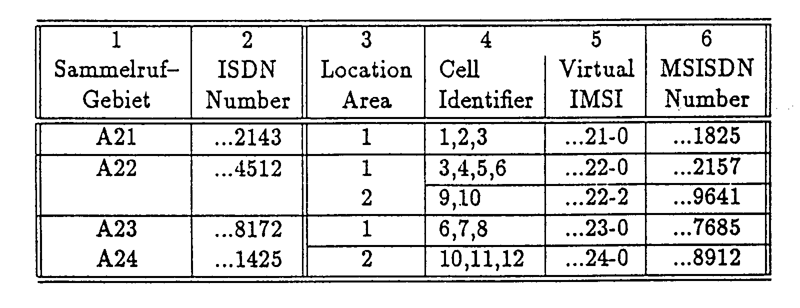

Das GSM-Netz sendet anschließend die entsprechende IMSI, hier 21 - 0, in der gesamten Location Area (in der Zeichnung hell unterlegte Sechsecke). Da nur diejenigen Mobilgeräte den Sammelruf empfangen sollen, die sich in dem Sammelrufgebiet A21 aufhalten, benötigen diese Mobilgeräte die Definition von A21, d.h. die zugehörigen Zellennummern bzw. Ortskoordinaten. Im Falle des Sammelrufgebietes A21 sind dies die Zellen mit LAC=1 und CI=1,2,3. Im Falle der Grenzzelle CI=3, die auch zum Sammelrufgebiet A22 gehört, gehören darüberhinaus noch Koordinatenangaben zur Definition der exakten Bereichsgrenze. Die von den am Sammelrufverfahren teilnehmenden Mobilteilnehmern zu wählende Dispatcher-Adresse (ISDN-Nummer lautet ...2143, siehe Zeile 1, Spalte 2 der Tabelle).

Der Sammelrufbereich A22 liegt im Grenzbereich zweier Location Areas, d.h. er gehört zwei Location Areas an. Der Dispatcher muß daher zwei MSISDNs wählen, um einen Sammelruf abzusetzen. Mit der MSISDN ...2157 bzw. der IMSI ...22 - 0 erreicht er die Mobilteilnehmer, die sich in den Zellen CI=3,4,5,6 der Location Area 1 aufhalten, während der mit der MSISDN ...9641 bzw. IMSI ...22 - 2 jene Mobilteilnehmer erreicht, die sich in den Zellen CI=9,10 der Location Area 2 aufhalten, siehe Zeilen 2 und 3 der Tabelle. Die von den gerufenen Mobilteilnehmern zu wählende Dispatchernummer lautet ...4512. Zur Festlegung der genauen Bereichsgrenzen in den Zellen LAC=1, CI=6 und LAC=2, CI=10 ist darüberhinaus weitere Ortsinformation notwendig, die wie bereits erwähnt gewonnen werden kann.

Die Sammelrufgebiete A23 und A24 sind weitere Beispiele. Der Vollständigkeit halber sind die zugehörigen Parameter als Zeilen 4 und 5 in der Tabelle ebenfalls aufgeführt.

Ist das erfindungsgemäße Verfahren bislang nur anhand von ortsfesten Dispatchers erläutert worden, sei doch erwähnt, daß das Verfahren auch problemlos durch mobile Dispatcher iniziert werden kann. Der mobile Dispatcher wählt dazu eine vordefinierte ortsfeste Endeinrichtung, beispielsweise eine PABX, an, die für ihn den Sammelruf in der oben beschriebenen Weise abwickelt, d.h. die MSISDN des Sammelrufgebietes wählt, die antwortenden Mobilteilnehmer zu einer gerichteten Konferenz zusammenschaltet und den mobilen Dispatcher als Quelle einspeist.

## Patentansprüche

1. Verfahren zur ortsselektiven Übermittlung von vordefinierte Kurzdaten und ggf. Sprachinformation enthaltenden Sammelrufen von einem ortsfesten Dispatcher, der Zugang zu einem GSM-Netz hat, an Mobilteilnehmer des GSM-Netzes, **gekennzeichnet durch** die folgenden Merkmale:
a) geographische Sammelrufgebiete werden jeweils als eine Anzahl benachbarter Funkzellen definiert,
b) den geographischen Sammelrufgebieten (LA) ist wenigstens ein spezielles Sammelruf-MSISDN/IMSI-Paar zugeordnet,
c) in den Mobilgeräten der betreffenden Mobilteilnehmer sind die für sie relevanten Sammelruf-IMSIs mit den zugehörigen Sammerufbereichen sowie den zugehörigen Dispatcher-Adressen (ISDN) gespeichert,
d) ein Sammelruf wird in einem der Sammelruf-IMSIs vom Dispatcher abgesetzt,
e) die Mobilgeräte der betreffenden Mobilteilnehmer zeigen den Empfang einer für sie relevanten Sammelruf-IMSI und ggf. deren vordefinierte Bedeutung dem Teilnehmer optisch und/oder akustisch an, und
f) die angesprochenen Mobilgeräte quittieren den Empfang des Sammelrufs an den Dispatcher jeweils durch einen MOC.

2. Verfahren nach Anspruch 1, dadurch gekennzeichnet, daß die Mobilteilnehmer vom Dispatcher zu einer gerichteten Punkt-zu-Mehrpunkt-Konferenz mit dem Dispatcher als Nachrichtenquelle und den Mobilteilnehmern als Nachrichtensenken zusammengeschaltet werden.

3. Verfahren nach einem der Ansprüche 1 und 2, dadurch gekennzeichnet, daß der Dispatcher über ein PABX-Terminal Zugang zu dem GSM-Netz hat.

4. Verfahren nach Anspruch 1, dadurch gekennzeichnet, daß
a) die geographischen Sammelbereichsgrenzen mit Funkzellengrenzen übereinstimmen,
b) die Nummern der Funkzellen, die zu den jeweiligen Sammelrufbereichen gehören, in den Mobilgeräten der betreffenden Mobilteilnehmer gespeichert sind,
c) die Mobilgeräte bei Empfang einer Sammelruf-ISMI durch Zellennummernvergleich entscheiden, ob der Sammelruf für sie relevant ist,
d) die angesprochenen Mobilgeräte fordern zutreffendenfalls durch Aussendung MOC einer vorher vereinbarten, netzweit gültigen Dispatcher-Nummer (ISDN) den Teledienst TS12 vom GSM-Netz an, und
e) das GSM-Netz leitet die einzelnen MOCs unter Verwendung des GSM-Merkmals zellspezifisches Routing "zum nächstgelegenen Dispatcher".

5. Verfahren nach Anspruch 4, dadurch gekennzeichnet, daß
a) die Sammelrufbereiche mit eingerichteten GSM-Location Areas übereinstimmen,
b) in den Mobilgeräten nur die zu den jeweiligen Sammelrufgebieten gehörenden und für das einzelne Mobilgerät relevanten Sammelruf-IMSIs gespeichert sind.

6. Verfahren nach einem der vorhergehenden Ansprüche, dadurch gekennzeichet, daß der ortsfeste Dispatcher den Sammelruf aufgrund eines von ihm empfangenen, von einem Mobilteilnehmer ausgehenden Anrufs absetzt und die Punkt-zu-Mehrpunkt-Konferenz so konfiguriert, daß die vom rufenden Mobilteilnehmer kommende Nachricht in den Sammelruf eingespeist wird.
